# EUROPEAN PATENT SPECIFICATION

(11) **EP 1 607 819 B1**
(45) Date of publication and mention of the grant of the patent: **06.08.2008**
(21) Application number: 05076583.3
(22) Date of filing: 03.12.2001
(51) Int. Cl.: G05D 23/13

(54) **Flow mixer**
Strömungsmischer
Mitigeur

(30) Priority: 06.12.2000 GB 0029714; 26.01.2001 US 264602 P
(43) Date of publication of application: 21.12.2005
(62) Divisional of application: 01999865.7
(73) Proprietor: Valquest Limited, Hampshire P09 6BS (GB)
(72) Inventor: Swadling, Jeremy Philip, Rowlands Castle, Hampshire P09 6BS (GB)
(74) Representative: Brooks, Nigel Samuel

(56) References cited:
- EP-A- 0 566 433
- EP-A- 0 694 721
- WO-A-00/68754
- US-A- 4 029 256

## Description

The present invention relates to a cartridge for a flow mixer and a mixer for two liquid flows at different temperatures, particularly though not exclusively for thermostatic mixing of water in a shower.

It is known to employ a thermostatic capsule to move a shuttle to open or close small gaps on either side of the shuttle. It is convenient for this shuttle to be circular with the gaps being annular, but this gives rise to other problems.

The inlet to the annular gaps is conveniently radially inwards, with mixed flow then passing axially to the thermostatic capsule. This arrangement calls for flow regulation downstream of the capsule and on the side of the capsule opposite from flow and temperature controls. Conventionally, the flow control has been carried out by means of a member spaced radially outwards of the shuttle. This mitigates against a compact structure.

EP 0 566 433 Vernet teaches a cartridge for a flow mixer comprising a barrel having an outlet at one end, two respective liquid inlets spaced along the barrel, and a shuttle mounted in the barrel. However, there is no teaching of sealing of the barrel within the tap in which it is placed.

The object of the invention is to provide an arrangement for sealing of the cartridge.

According to the invention there is provided a cartridge for a flow mixer comprising:
- a barrel having:
   - an outlet at one end of the barrel,
   - two aligned barrel portions and
   - a intermediate barrel portion and
   - the barrel portions providing:
   - two respective liquid inlets spaced along the barrel, one to one side of the intermediate barrel portion and the other to the other side thereof, and
- a shuttle mounted in the barrel in sealing relationship with the intermediate barrel portion and axially movable in the barrel, the shuttle and the barrel being adapted and arranged to:
   - close one of the inlets by co-operation with the inlet's respective barrel portion and the intermediate barrel portion when moved towards this barrel portion;
   - close the other inlet by co-operation with its respective barrel portion and the intermediate portion when moved in the other direction and
   - allow to be open in a mid position, and
   - the shuttle being apertured for flow therethrough,
- a thermostatic capsule arranged within the barrel in the flow of liquid through the inlets and adapted to control the position of the shuttle for selection of flow from the two inlets,
- a combined-flow control member ("flow controller") arranged downstream of the thermostatic capsule at the outlet end of the barrel for controlling the combined flow from the inlets and
- three outer seals encircling the axis of the barrel for sealing to an outer body, the seals comprising:
   - a back seal for sealing the outlet of the barrel from the inlet closer to the outlet;
   - a front seal for sealing the inlet further from the outlet from leaking to ambient; and
   - an oblique seal for sealing the inlet closer to the outlet from the inlet further from the outlet, the oblique seal being spaced further from the back seal to one side of the barrel and spaced further from the front seal to the other side of the barrel.

According to a second aspect of the invention there is provided a mixer tap for mixing two liquid flows, the tap comprising:
- an outer body, having a central cavity with
   - an open front,
   - a rear outlet from the central cavity and
   - two opposed inlets from the sides of the body, the inlets in the body being coaxial and the cavity being adapted for sealing; and
- a cartridge of the second aspect of the invention, the cartridge sealing with the body via the outer collar:
   - firstly at the open front of the central cavity,
   - secondly obliquely in the cavity to direct flow from one body inlet to one cartridge inlet and flow from the other body inlet to the other cartridge inlet,
   - thirdly at the rear of the body to direct flow from the cartridge outlet to the body rear.

Preferably the outer body is of forged brass.

Preferably the cavity is tapered with an larger diameter parallel land at the open front for the first seal, a frusto-conical, intermediate portion for the second, oblique seal and a smaller parallel land for the third seal adjacent the rear outlet, the seals being O-rings carried on the outer collar.

Normally the rear body outlet will be upwardly directed with respect to the tap orientation when a common plane of the central cavity and the two body inlets is horizontal.

To help understanding of the invention, a specific embodiment thereof will now be described by way of example and with reference to the accompanying drawings, in which:
Figure 1 is a perspective view of a mixer tap of the invention, with control knobs shown broken away;
Figure 2 is cross-secti onal view through a body of the tap, showing its flow mixing cartridge;
Figure 3 is a similar view showing the cartridge in cross-section;
Figure 4 is a scrap cross-sectional view in the other plane of a shuttle in the cartridge;
Figure 5 is a cross-sec tion view of the cartridge on a larger scale than Figure 3;
Figure 6 is a scrap view of a modified shuttle with a shut-off seal;
Figure 7 is a scrap cross-sectional view of the outlet of the mixer tap with an alternative flow controller, shown open in the left half of the Figure and closed in the right half of the Figure;
Figure 8 is similar view of an alternative unitary collar (with other components except for the shuttle omitted);
Figure 9 is a similar view of two alternative actuating finger arrangements, in the respective left and right halves of the Figure; and
Figure 10 is a view similar to Figure 8 of an alternative barrel and shuttle configuration.

Referring to the drawings, the mixer tap for a shower there shown has a body 1, with a cold water pipe connection 2, a hot water pipe connection 3 and a mixed water outlet connection 4. A flow control knob 5 and a water temperature control knob 6 are provided at the front of the tap.

At the heart of the tap is a flow mixer cartridge 11, which is sealed in a cavity 12 in the body via an outer collar 14. The collar has three sealing grooves 15,16,17 carrying O-rings 115,116,117. The front groove 15 is a plain circular groove and its O-ring mates with a circular-cylindrical land 215 at the front of the body cavity 12. Equally the rear groove 17 is also a plain circular groove of smaller diameter than the front groove 15 and its O-ring mates with a circular-cylindrical land 217 at the back of the body cavity 12. Between the lands, the cavity has a frusto-conical wall 216. The groove 16 and its O-ring 116 have a complementary, oblique shape.

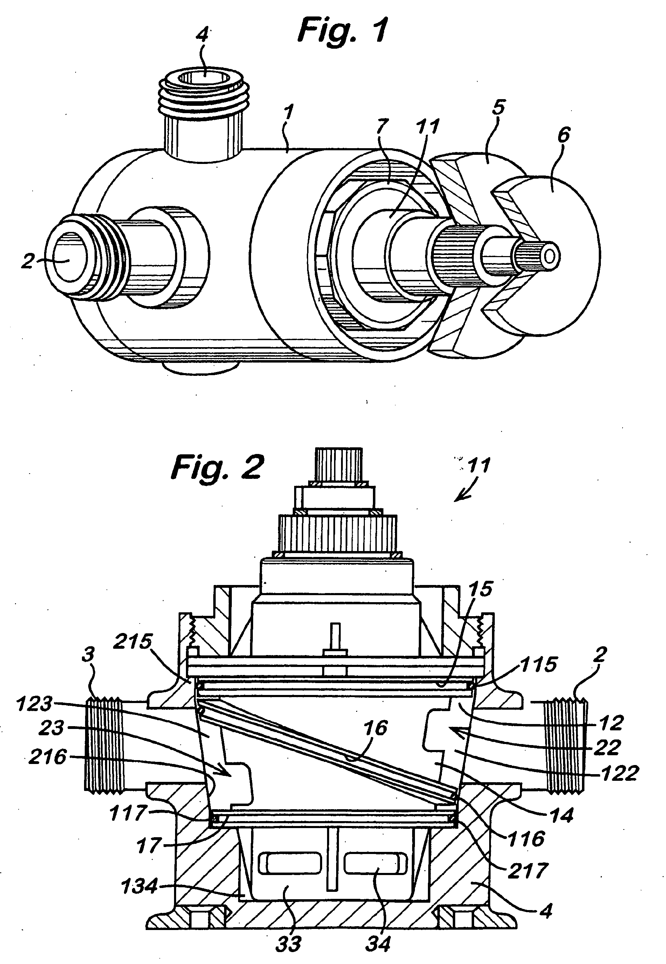

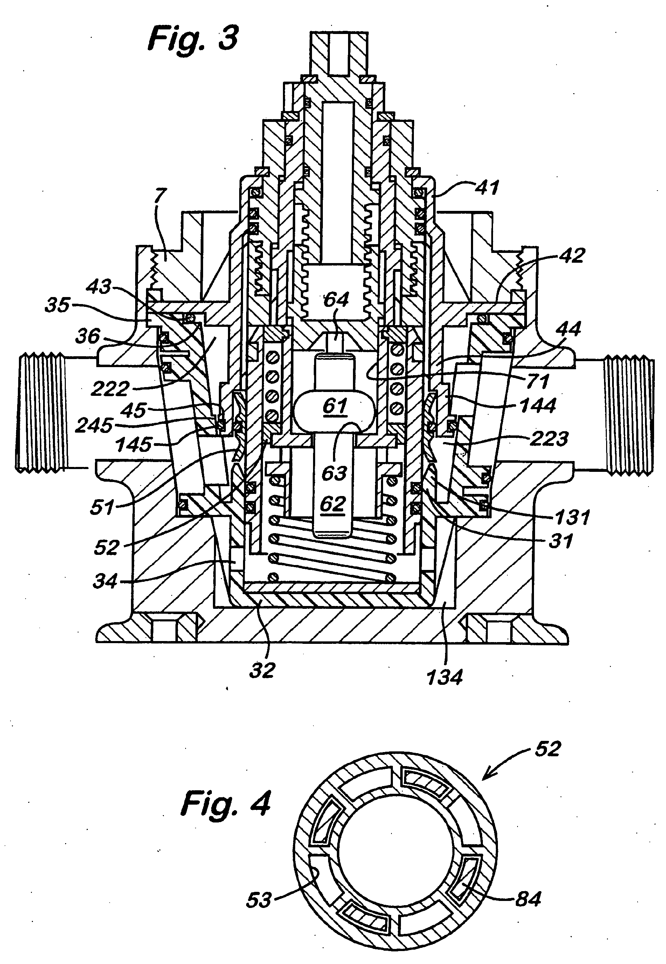

To one side, the right hand side in Figure 2 & 3, between the front groove 15 and the oblique groove 16, the collar has a cold water port 22; whilst to the other side between the back groove 17 and the oblique groove 16, the collar has a hot water port 23. These ports are in communication with the cold and hot water connections 2,3 in the body, via inlet plena portions 122,123 of the cavity between the body and the collar. The connections are able to be axially aligned with each other, since the ports 22,23 are offset and isolated from each other by the oblique seal. Thus with the body forged from brass, the inlet pipe connections can be formed by straight forward machining operations.

The collar 14 is an injection moulding of plastics material and is integrally moulded with an rear barrel portion 31, the collar being generally frusto-conical to match the shape of the body cavity; whilst the barrel portion is parallel with an end face 131. The collar moulding has a closed end 32, closing both the collar and the barrel. In an extension 33 of the barrel beyond the collar, there is an outlet port 34. This opens to a rear outlet plenum portion 134 of the cavity, from which latter in turn the outlet connection 4 extends.

A front barrel moulding 41 is fitted to the rear-barrel/collar moulding 14/31, mating with it at a flange 35, adjoining the sealing groove 15, and at an inner sealing land 36. A flange 42 of the front barrel moulding abuts the flange 35 and the two are held together by a threaded ring 7 in the body 1 at the mouth of the cavity 12. An O-ring 43 is captive between the flanges and seals them. The flange 42 extends in to support the front barrel proper 44, whose internal diameter is slightly larger that of the rear barrel and which has a rear end face 144 opposite the front end face 131 of the rear barrel. The rim flange 51 of a shuttle 52 is positioned between the faces 131,144, with a small clearance. The front barrel extends back as a sealing groove 45 past the end face 144 and is provided with an O-ring 145, which seals on a land 245 of the collar 14, the land forming an intermediate portion of the barrel. The seal 45/145/245 divides the internal space of the collar into inner, cold and hot, plena portions 222,223. These are in communication with the respective small clearance cold and hot gaps 322,323 between the barrel end face 144 and the shuttle and the barrel end face 131 and the shuttle. The connection between the front barrel 44 and the sealing groove 45 is apertured 46. Thus water can flow from the cold and hot plena portions 222,223 via the cold and hot gaps 322,323 into the barrels 44,31 in accordance with position of the shuttle. In other words, the cold and hot gaps 322,323 provide hot and cold inlets into the combined barrel.

The shuttle itself is apertured 53, so that flow can pass it from the front barrel 44 to the rear barrel 31 and onto the outlet port 34. The shuttle is fitted to a thermostatic capsule 61, which has an expansive wax chamber 62, a support flange 63 and an actuating push rod 64, which is pushed out of the capsule in response to the wax chamber experiencing increased temperature. This action adjusts the cold and hot gaps 322,323. Since it is possible for a sudden increase in temperature, as in first use of a shower when hot water first arrives, to extend the push rod by more than the aggregate of the gaps, the connection between the shuttle and the capsule is via a spring reactor 71. It and the shuttle have complementary abutments 54,72, which are arranged to allow the capsule to move back in the cartridge on such over temperature causing the shuttle to bottom on the rear barrel end face 131. This movement apart of the abutments is against the action of a spring 73 acting between the abutment 54 and a clip 74 on a forwards extension 75 of the reactor. The spring normally keeps the abutments 54,72 together, whereby the movement of the support flange 63 of the capsule is transmitted to the shuttle via a seat 76 for the support flange. The spring reactor 71 also has a rearwards extension 77, which is apertured 78 for water flow to the wax chamber 62, with a flange 79 for a main spring 80 against which the capsule normally acts for adjustment of the position of the shuttle. The spring reacts against a sealing washer 83 and the closed end 32 of the collar moulding.

A flow controller 81 is provided within the rear barrel. It is in the form of a sleeve carrying two O-rings 181 for sealing with the rear barrel and having an end face 82 for abutment with the sealing washer 83 carried inside the closed end 32 of the collar moulding. The sleeve has integral fingers 84, which extend forwards through certain of the apertures 53 in the shuttle. Rearwards movement of the flow controller throttles and ultimately closes the tap by isolating the inner, outlet plenum portion 234 of the cartridge, in which the wax chamber 62 is positioned, from the outer, plenum portion 134 of the cavity 14. More specifically, the sleeve end face 82 abuts the sealing washer 83 and isolates the outlet port 34 from the inlet ports 22,23.

The arrangements for longitudinal actuation of the flow control sleeve 81 and the capsule/shuttle 61/52 will now be described. Essentially, they comprise splined members driven longitudinally by screw thread co-operation with rotary members restrained from longitudinal movement.

The front barrel moulding 41 has internal splines 47, open towards the rear and terminating short of a smaller diameter plain bore 48 and a turned-in, front rim 49 of the moulding. An actuating sleeve 85 has complementary outer splines 86 for sliding movement in the barrel without rotation. It has a skirt 87 with apertures 88 in which hooks 89 at the end of the fingers 84 engage. The sleeve 85 has an internal screw thread 90 and internal splines 91 proud of the thread at the inner end of the sleeve.

An actuation threaded member 92 is provided at the front of the barrel moulding, being longitudinally restrained in it by abutment of a step 93 against the inside of the rim 49 and of a circlip 95 against the outside of the rim, the circlip being engaged in a groove 96 in the actuation member 92. A pair of O-rings 192 engage in grooves in the member and seal it to the barrel at the bore 48. The member has an external screw thread 97 at its inner end, engaged in the thread 90 of the sleeve 85, and a broached outer head 98 engaged in the flow control knob 5. Thus the threaded member is rotatable but axially restrained; whilst the sleeve is rotationally restrained but axially movable. On turning of the knob 5, the actuating sleeve 85 is moved axially and with it the sleeve 81, moving its end face 82 towards or away from the sealing washer 83. Thus the overall flow through the tap is controlled.

Housed within the flow control actuation threaded member 92 is a spacer sleeve 99, with a step and circlip axial restraint similar to that of the threaded member. It has external splines 100 engaged with the splines 91 of the actuating sleeve 85. Thus sleeve is restrained against axial and longitudinal movement. It is also sealed by an O-ring 199 to the member 92. Mounted within the sleeve 99 in exactly like manner to the members 85, 92 are a thermostat actuating member 101 and a thermostat actuation threaded member 102 with a broached head 103 to which the water temperature control knob 6 is fitted. The actuating member 101 has an indented inner end 104 against which the push rod 64 of the thermostatic capsule abuts. Rotation of the temperature control knob 6 moves the shuttle 52 under the action of the reaction spring 73 or the main spring 80 to close the respective gap 322,323 to raise or lower the outlet water temperature as the temperature changes. After initial shuttle movement, the capsule will change length to adjust the shuttle back in the opposite direction and thus control the temperature to the newly selected one.

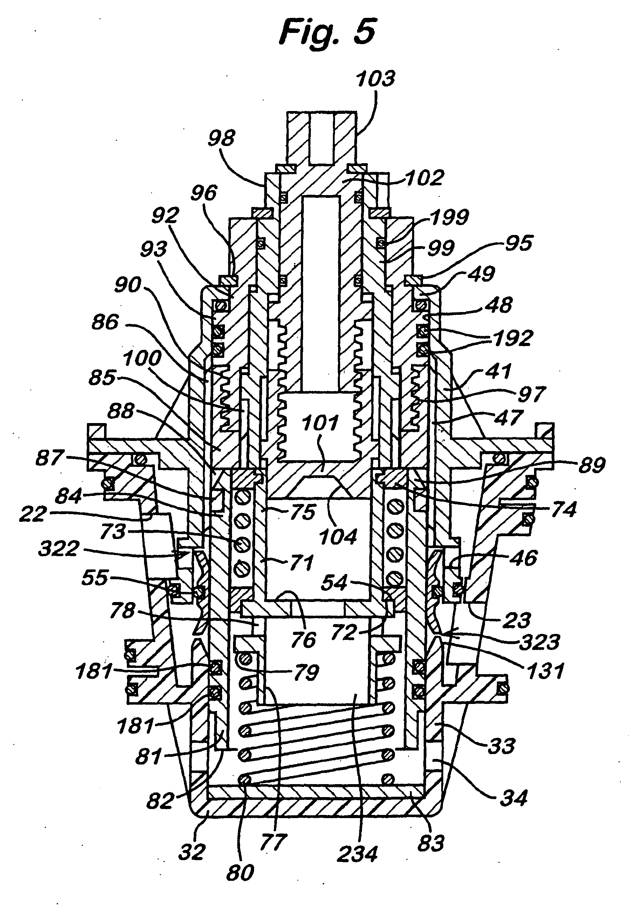

It will be appreciated from the fact that the cartridge is shown in Figure 5 reversed right for left in comparison with Figure 3, that it can be fitted in either orientation to suit left or right entry of cold - and hot - water into the body of the tap. This is a distinct advantage in that it is not unknown for plumbers to reverse the plumbing accidentally.

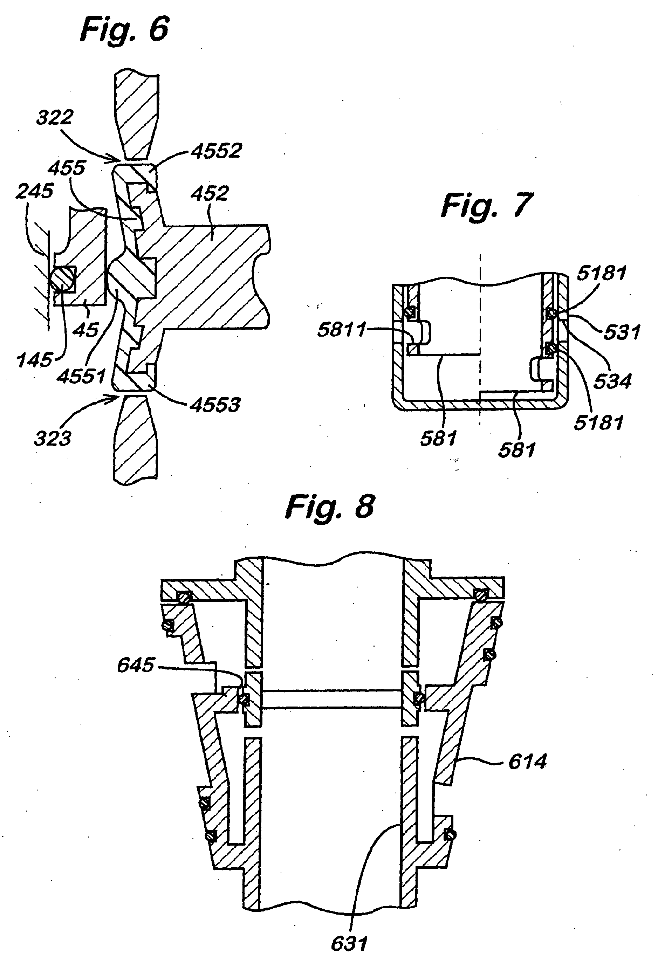

Referring now to Figure 6, a scrap view of a modified shuttle is there shown. In place of an O-ring 55 carried on the rim of the shuttle and acting inside the grooved portion 45 of the front barrel, to separate the cold and hot plena 222,223, the shuttle 452 has an over-moulding 455 of elastomeric material. This has a sealing protrusion 4551 acting in the manner of the O-ring and annular portions 4552,4553 at the cold and hot gaps 322,323. This has the advantage that in the event of failure of either hot or cold water supply , the thermostatic capsule drives the shuttle in the direction to fully open the failed supply and fully close the remaining supply. This has the effect of turning off the tap. Provision of the moulding at the gaps enables the shuttle to fully seal the gap corresponding to the remaining supply.

The invention is not intended to be restricted to the details of the above described embodiment. For instance, it can be envisaged that the oblique seal could be configured as a front to back seal in the vertical plane. However, the O-ring would have to be replaced in that instance.

The flow controller can be provided as an apertured cylinder 581 co-operating with the rear barrel portion 531 as shown in Figure 7. Barrel apertures 534 align with apertures 5811 in the cylinder when the mixer tap is open and are out of alignment to close the tap. When the tap is closed two O-rings on the cylinder are positioned above and below the barrel apertures, sealing them.

As shown in Figure 8, the rear barrel portion 631 can be formed as one, or integrally welded together, not only with the collar 614, but also with the land 645 to dispense with the necessity of seal 145.

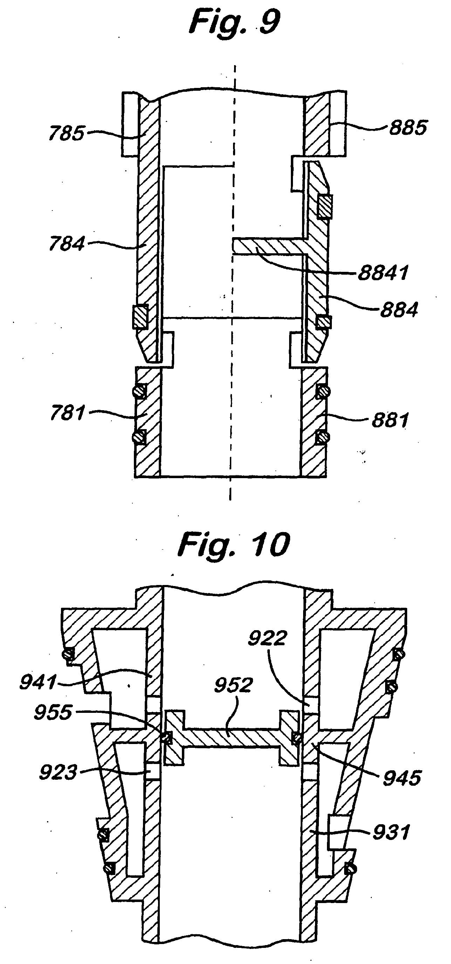

As shown in the left hand side of Figure 9, the actuating fingers 784 can be integral with the actuating sleeve 785 and clipped to the flow control member 781. Alternatively as shown in right hand side of the Figure fingers 884 can be clipped to both the actuating sleeve 885 and the flow control member 881, with the fingers being spaced circumferentially by means of an integral ring 8841.

Another alternative arrangement is shown in Figure 10, in which the two aligned barrel portions 931,941 and the intermediate portion 945 of the barrel are all integral parts of unitary construction. The barrel has cold and hot inlets 922,923 in the form of apertures in the walls of the barrel between the front portion and the intermediate portion and between the intermediate portion and the rear portion. The shuttle 952 is contained within the barrel has an O-ring 955 sealing it to the intermediate portion. It moves to seal either the sets of ports as required.

## Claims

1. A cartridge (11) for a flow mixer comprising:
• a barrel having:
• an outlet (34) at one end of the barrel,
• two aligned barrel portions (31,44) and
• a intermediate barrel portion (245) and
• the barrel portions providing:
• two respective liquid inlets (22,23) spaced along the barrel, one to one side of the intermediate barrel portion and the other to the other side thereof, and
• a shuttle (52) mounted in the barrel in sealing relationship with the intermediate barrel portion and axially movable in the barrel, the shuttle and the barrel being adapted and arranged to:
• close one of the inlets by co-operation with the inlet's respective barrel portion and the intermediate barrel portion when moved towards this barrel portion;
• close the other inlet by co-operation with its respective barrel portion and the intermediate portion when moved in the other direction and
• allow to be open in a mid position, and
• the shuttle being apertured for flow therethrough,
• a thermostatic capsule (61) arranged within the barrel in the flow of liquid through the inlets and adapted to control the position of the shuttle for selection of flow from the two inlets,
• a combined-flow control member ("flow controller" 81) arranged downstream of the thermostatic capsule at the outlet end of the barrel for controlling the combined flow from the inlets ;
• the cartridge being **characterized by** three outer seals encircling the axis of the barrel for sealing to an outer body, the seals comprising:
• a back seal (117) for sealing the outlet of the barrel from the inlet closer to the outlet;
• a front seal (115) for sealing the inlet further from the outlet from leaking to ambient; and
• an oblique seal (116) for sealing the inlet closer to the outlet from the inlet further from the outlet, the oblique seal being spaced further from the back seal to one side of the barrel and spaced further from the front seal to the other side of the barrel.

2. A cartridge as claimed in claim 1, wherein the seals are arranged to seal with a conical bore.

3. A cartridge as claimed in claim 1 or claim 2, wherein the seals are O-rings carried in respective grooves on the outer surface of the cartridge.

4. A cartridge as claimed in claim 1, claim 2 or claim 3, wherein the barrel has an outer collar integrally connected with the aligned barrel portion having the outlet, the collar having:
• a first inlet between the back seal and the oblique seal to one side of the barrel and
• a second inlet between the front seal and the oblique seal to the other side of the barrel, and
• the first and second collar inlets communicating with the barrels inlets.

5. A cartridge as claimed in claim 4, wherein the collar inlets communicate with the barrel inlets via plenum chambers extending around the barrel.

6. A cartridge as claimed in any preceding claim, including:
• means including at least one finger passing through the shuttle for actuating the flow controller to control the combined flow.

7. A mixer tap for mixing two liquid flows, the tap comprising:
• an outer body, having a central cavity with
• an open front,
• a rear outlet from the central cavity and
• two opposed inlets from the sides of the body, the inlets in the body being at least substantially coaxial and the cavity being adapted for sealing; and
• a cartridge as claimed in any one of claims 1 to 6, the cartridge sealing with the body via the outer collar:
• firstly at the open front of the central cavity,
• secondly obliquely in the cavity to direct flow from one body inlet to one cartridge inlet and flow from the other body inlet to the other cartridge inlet,
• thirdly at the rear of the body to direct flow from the cartridge outlet to the body rear.

8. A mixer tap as clamed in claim 7, wherein the outer body is of forged brass.

9. A mixer tap as claimed in claim 7 or claim 8, wherein the cavity is tapered with an larger diameter parallel land at the open front for the first seal, a frusto-conical, intermediate portion for the second, oblique seal and a smaller parallel land for the third seal adjacent the rear outlet, the seals being O-rings carried on the outer collar.

## Patentansprüche

1. Einsatz (11) für einen Durchflussmischer, aufweisend.
• eine Patrone mit:
• einem Auslass (34) an einem Ende der Patrone,
• zwei miteinander fluchtenden Patronenteilen (31, 44) und
• einem Patronenzwischenteil (245), wobei
• die Patronenteile aufweisen:
• zwei separate Flüssigkeitseinlässe (22, 23) im Abstand entlang der Patrone, von denen der eine an der einen Seite des Patronenzwischenteils und der andere an dessen anderer Seite angeordnet ist, und
• ein in der Patrone gegenüber dem Patronenzwischenteil abgedichtet angeordnetes und axial in der Patrone bewegliches Küken, wobei das Küken und die Patrone ausgebildet und angeordnet sind, um:
• einen der Einlässe durch Zusammenwirken mit dem Patronenzwischenteil und dem dem einen Einlass zugeordneten Patronenteil um bei Bewegung in Richtung auf dieses Patronenteil zu schließen;
• den anderen Einlass durch Zusammenwirken mit dessen zugehörigem Patronenteil und dem Patronenzwischenteil bei Bewegung in die entgegengesetzte Richtung zu schließen, und
• zu gestatten, in der Zwischenstellung offen zu sein, wobei
• das Küken mit Öffnungen für den Durchfluss versehen ist,
• einer thermostatischen Kapsel (61), die in der Patrone im Durchfluss von Flüssigkeit durch die Einlässe angeordnet und ausgebildet ist, die Lage des Kükens zur Wahl des Durchflusses von den beiden Einlässen zu kontrollieren,
• ein kombiniertes Durchflussregelelement ("Durchflussregler" 81), das in Durchströmrichtung hinter der thermostatischen Kapsel am Auslassende der Patrone zum Steuern oder Regeln des Gesamtdurchflusses von den Einlässen angeordnet ist; wobei der Einsatz **gekennzeichnet ist durch**
• drei die Achse der Patrone umgebende äußere Dichtungen zum Abdichten gegenüber einem äußeren Gehäuse, wobei die Dichtungen aufweisen:
• eine hintere Dichtung (117), zum Abdichten des Auslasses der Patrone gegenüber dem näher zum Auslass liegenden Einlass;
• eine vordere Dichtung (115) zum Abdichten des weiter vom Auslass entfernten Einlasses gegen Undichtigkeiten gegenüber der Umgebung; und
• eine schräge Dichtung (116) zum Abdichten des näher am Auslass liegenden Einlasses von dem weiter entfernt vom Auslass liegenden Einlass, wobei die schräge Dichtung an der einen Seite der Patrone von der hinteren Dichtung einen größeren Abstand hat und an der anderen Seite der Patrone von der vorderen Dichtung weiter beabstandet ist.

2. Einsatz nach Anspruch 1, **dadurch gekennzeichnet, dass** die Dichtungen angeordnet sind, um mit einer konischen Bohrung zu dichten.

3. Einsatz nach Anspruch 1 oder Anspruch 2, **dadurch gekennzeichnet, dass** die Dichtungen O-Ringe sind, die in hierfür vorgesehenen Nuten am Außenumfang des Einsatzes aufgenommen sind.

4. Einsatz nach Anspruch 1, Anspruch 2 oder Anspruch 3, **dadurch gekennzeichnet, dass** die Patrone einen einstückig mit dem den Auslass aufweisenden, ausgerichteten Patronenteil ausgebildeten äußeren Kragen hat, wobei der Kragen aufweist:
• einen ersten Einlass zwischen der hinteren Dichtung und der schrägen Dichtung an einer Seite der Patrone und
• einen zweiten Einlass zwischen der vorderen Dichtung und der schrägen Dichtung an der anderen Seite der Patrone und
• wobei die ersten und zweiten Krageneinlässe mit den Patroneneinlässen in Verbindung stehen.

5. Einsatz nach Anspruch 4, **dadurch gekennzeichnet, dass** die Krageneinlässe mit den Patroneneinlässen über Sammelkammern in Verbindung stehen, die sich um die Patrone herum erstrecken.

6. Einsatz nach einem der vorstehenden Ansprüche, **gekennzeichnet durch**:
• Mittel mit wenigstens einem sich **durch** das Küken hindurch erstreckenden Finger zur Betätigung des Durchflussreglers zum Steuern bzw. Regeln des Gesamtdurchflusses.

7. Mischerbatterie zum Mischen von zwei Flüssigkeitsströmen, wobei die Batterie aufweist:
• ein äußeres Gehäuse mit einer zentralen Ausnehmung mit
• einer offenen Vorderseite,
• einem rückwärtigen Auslass aus der zentralen Ausnehmung und
• zwei gegenüberliegenden Einlässen an den Seiten des Gehäuses, wobei die Einlässe in das Gehäuse zumindest im Wesentlichen koaxial verlaufen und die Ausnehmung zum Abdichten ausgebildet ist; und
• einen Einsatz nach einem der Ansprüche 1 bis 6, wobei der Einsatz gegenüber dem Gehäuse über den äußeren Kragen abgedichtet ist:
• erstens an der offenen Vorderseite der zentralen Ausnehmung,
• zweitens schräg in der Ausnehmung, um den Durchfluss von einem Gehäuseeinlass zu einem Einsatzeinlass und den Durchfluss von dem anderen Gehäuseeinlass zu dem anderen Einsatzeinlass zu lenken,
• drittens an der Rückseite des Gehäuses, um den Durchfluss von dem Einsatzauslass zur Gehäuserückseite zu lenken.

8. Mischbatterie nach Anspruch 7, **dadurch gekennzeichnet, dass** das äußere Gehäuse aus geschmiedetem Messing besteht.

9. Mischbatterie nach Anspruch 7 oder Anspruch 8, **dadurch gekennzeichnet, dass** die Ausnehmung konisch zuläuft mit einer parallelen Dichtfläche größeren Durchmessers an der offenen Vorderseite für die erste Dichtung, einem kegelstumpfförmigen Zwischenbereich für die zweite, schräge Dichtung und einer kleineren parallelen Dichtfläche für die dritte Dichtung nahe des rückwärtigen Auslasses, wobei die Dichtungen O-Ringe sind, die an dem äußeren Kragen angeordnet sind.

## Revendications

1. Cartouche (11) pour un mitigeur comprenant :
• un cylindre présentant :
• une sortie (34) à une extrémité du cylindre,
• deux parties de cylindre alignées (31, 44) et
• une partie de cylindre intermédiaire (245) et
• les parties de cylindre fournissant :
• deux entrées de liquide (22, 23) respectives espacées le long du cylindre, une sur un côté de la partie de cylindre intermédiaire et l'autre sur l'autre côté de celle-ci, et
• une navette (52) montée dans le cylindre en relation d'étanchéité avec la partie de cylindre intermédiaire et axialement mobile dans le cylindre, la navette et le cylindre étant adaptés et agencés pour :
• fermer une des entrées par coopération avec la partie de cylindre respective de l'entrée et la partie de cylindre intermédiaire lorsqu'elle est déplacée en direction de cette partie de cylindre ;
• fermer l'autre entrée par coopération avec sa partie de cylindre respective et la partie intermédiaire lorsqu'elle est déplacée dans l'autre direction et
• permettre d'être ouverte dans une position centrale, et
• la navette étant ouverte pour que le flux puisse la traverser,
• une capsule thermostatique (61) agencée à l'intérieur du cylindre dans le flux de liquide à travers les entrées et adaptée pour contrôler la position de la navette pour sélectionner le flux provenant des deux entrées,
• un élément de commande de flux combiné ("dispositif de commande de flux" (81)) agencé en aval de la capsule thermostatique à l'extrémité de sortie du cylindre pour contrôler le flux combiné provenant des entrées ;
• la cartouche étant **caractérisée par** trois joints externes encerclant l'axe du cylindre pour l'étanchéifier par rapport à un corps externe, les joints comprenant :
• un joint arrière (117) destiné à étanchéifier la sortie du cylindre par rapport à l'entrée plus proche de la sortie;
• un joint avant (115) destiné à étanchéifier l'entrée plus loin de la sortie pour éviter des fuites dans les zones ambiantes ; et
• un joint oblique (116) destiné à étanchéifier l'entrée plus proche de la sortie par rapport à l'entrée plus éloignée de la sortie, le joint oblique étant espacé plus loin du joint arrière vers un côté du cylindre et espacé plus loin du joint avant vers l'autre côté du cylindre.

2. Cartouche selon la revendication 1, dans laquelle les joints sont agencés pour être scellés avec un alésage conique.

3. Cartouche selon la revendication 1 ou la revendication 2, dans laquelle les joints sont des joints toriques portés dans des rainures respectives sur la surface externe de la cartouche.

4. Cartouche selon la revendication 1, la revendication 2 ou la revendication 3, dans laquelle le cylindre présente un collier externe raccordé de manière solidaire à la partie de cylindre alignée présentant la sortie, le collier présentant :
• une première entrée entre le joint arrière et le joint oblique sur un côté du cylindre et
• une seconde entrée entre le joint avant et le joint oblique sur l'autre côté du cylindre, et
• les première et seconde entrées de collier communiquant avec les entrées de cylindre.

5. Cartouche selon la revendication 4, dans laquelle les entrées de collier communiquent avec les entrées du cylindre via des chambres de plénum s'étendant autour du cylindre.

6. Cartouche selon l'une quelconque des revendications précédentes, comportant :
• des moyens comportant au moins un doigt passant à travers la navette pour actionner le dispositif de commande de flux et contrôler le flux combiné.

7. Robinet mitigeur destiné à mélanger deux flux de liquide, le robinet comprenant :
• un corps externe, présentant une cavité centrale dotée
• d'une partie avant ouverte,
• d'une sortie arrière depuis la cavité centrale et
• de deux entrées opposées depuis les côtés du corps, les entrées dans le corps étant au moins sensiblement coaxiales et la cavité étant adaptée pour l'étanchéité ; et
• une cartouche selon l'une quelconque des revendications 1 à 6, la cartouche se scellant au corps via le collier externe ;
• premièrement au niveau de la partie avant ouverte de la cavité centrale,
• deuxièmement de manière oblique dans la cavité pour diriger le flux d'une entrée du corps à une entrée de cartouche et qu'il s'écoule de l'autre entrée du corps à l'autre entrée de cartouche,
• troisièmement à l'arrière du corps pour diriger le flux de la sortie de la cartouche à l'arrière du corps.

8. Robinet mitigeur selon la revendication 7, dans lequel le corps externe est en laiton forgé.

9. Robinet mitigeur selon la revendication 7 ou la revendication 8, dans lequel la cavité est biseautée avec un chanfrein parallèle de diamètre plus grand au niveau de la partie avant ouverte pour le premier joint, une partie intermédiaire tronconique pour le deuxième joint oblique et un chanfrein parallèle plus petit pour le troisième joint adjacent à la sortie arrière, les joints étant des joints toriques portés sur le collier externe.
